# EUROPEAN PATENT APPLICATION

(11) **EP 1 707 048 A1**
(43) Date of publication of application: **04.10.2006**
(21) Application number: 06388022.3
(22) Date of filing: 29.03.2006
(51) Int. Cl.: A01G 25/16, C02F 1/00, C02F 3/04, E02B 11/00

(54) **A method of operating a percolation system for waste water as well as a percolation system for carrying out the method**

(30) Priority: 01.04.2005 DK 200500453
(71) Applicant: WAVIN B.V., 8031 EM Zwolle (NL)
(72) Inventor: Heidemann Jensen, Ole, 8882 Färvang (DK); Rasmussen, Søren, 8450 Hammel (DK)
(74) Representative: Noergaard, Tage

(57) **Abstract**

A method of operating a percolation system for waste water, said system comprising a sedimentation tank (1), a clearing basin (2), a pump well (5) provided with a pump (3) and a plurality of leach fields (14a-14h). An automatic opening and closing of the valves (11a-11h) is provided in a pre-programmed order and according to signals produced by said pump (3) or by corresponding signal-producing equipment by means of a program control unit (13) controlling said valves (11a-11h) arranged on a percolation manifold 10. The percolation manifold (10) is arranged between the pump well (5) and the leach fields (14a-14h). The use of this method ensures that the pump capacity for the leach fields associated with the system is made significantly more effective.

## Description

The invention relates to a method of operating a percolation system for waste water, said system comprising a septic tank, a sedimentation tank, a clearing basin, a pump well provided with a pump and a plurality of leach fields.

In pursuance of the National water environmental plan (for the year 2004), all owners of local leach fields in Denmark need to have their percolation system approved. This plan has given rise to a need for a strong expansion of leach fields.

A large percolation system having a certain leach field area is known, said system comprising a sedimentation tank with a subsequent clearing basin, and where the leach fields are placed in close proximity to said tanks. As a consequence of the water environmental plan and the regulations associated therewith, an increased leach field area is required. As the leach fields increase, a pump with increased pump capacity is required in order to press out the waste water so that it is effectively distributed across the entire leach field area.

For a user having a large leach field area, it can be difficult to find a pump - at an economically acceptable level - which can exert the pressure required for subjecting the entire area to pressure.

The object of the present invention is to provide a method of the above type which allows the pump capacity for the leach fields associated with the system to be more effective.

The method according to the invention is characterised in that an automatic opening and closing of the predetermined valves is provided in a pre-programmed order and according to signals produced by the pump or by corresponding signal-producing equipment by means of a program control unit controlling said valves arranged on a percolation manifold which is arranged between the clearing basin and the leach fields. In this way, a particularly effective utilisation of each of the leach fields is obtained, said leach fields being used gradually. In practice, this means that it is sufficient to use a pump with less capacity than hitherto required, and the percolation is improved because a high pressure is continuously ensured in the active portion of the leach fields. The mentioned reduction of the pump capacity provides the user with a significant advantage.

According to the invention, the leach fields may be monitored by means of the program control unit, which has appeared to be particuisrty advantageous.

Furthermore, according to the invention, each leach field may be monitored with regard to at least one parameter, such as the water level or the bacterial activity, and the signals corresponding to said parameter may be transmitted to the program control unit to determine the order in which the valves are opened and closed. This has also proved to be particularly reliable during operation.

The invention also relates to a percolation system for carrying out the method of the invention and said percolation system is characterised by comprising a sedimentation tank and a percolation manifold having openings provided with valves, said percolation manifold being connected to the sedimentation tank, and where an outlet pipe is connected to said valves, said system further comprising a pump for pumping the liquid which is to percolate into the system, monitoring units for monitoring for instance the water level and the bacterial level in the leach fields of the system, and for transmitting monitoring signals back to one or more of said valves with a view to opening or closing these. As a result, a system is obtained allowing the method according to the invention to be exploited in an effective manner.

According to the invention, the percolation manifold may be arranged in a well of a suitable type, e.g. a well with an inspection chamber base, thereby allowing the system to operate in a particularly reliable manner.

Furthermore, according to the invention, each outlet pipe extending from the percolation manifold may split into a plurality of thinner pipes, via for instance a leach manifold, when reaching the leach fields, for instance an outlet pipe of an outer diameter of 75 mm being split, via the leaching manifold, into four thinner pipes, i.e. standard percolation pipes, of an outer diameter of 40 mm. In this way, a particularly effective operation of the system is obtained.

Furthermore, according to the invention, the pipes and/or the percolation pipes may be made of PE, i.e. polyethylene, and/or PP, i.e. polypropylene, thereby allowing the system to be particularly durable.

According to the invention, the percolation manifold may be tubular and have a plurality of saddle connection members secured thereto, and at least one end of the percolation manifold may be formed by a T-piece for mounting the valves. This ensures a particularly effective distribution of water to the pipes and percolation pipes on the leach fields.

In addition, according to the invention, the inlet of the percolation manifold may preferable be shaped as an optionally larger saddle connection member or a T-piece, thereby obtaining a significant dependability.

Furthermore, according to the invention, the valves of the percolation manifold may be adapted to be opened or closed via a particular control system being connected to the aforementioned monitoring units.

Furthermore, according to the invention, the valves may for instance be butterfly valves with magnetic control devices, thereby obtaining a particularly reliable operation of the system.

Furthermore, according to the invention, the percolation system may be adapted to subject at least part of the total leach field area to pressure, said area being controlled by the aforementioned program control unit. As a result, the operation of the system is particularly reliable.

Finally, according to the invention, the program control unit of the percolation system may be provided with an auxiliary control unit allowing the use of a GSM model for sending alarms to a telephone or a PC. This ensures a particularly reliable operation of the system.

The invention is explained in detail below with reference to the drawings, in which
Fig. 1 is a schematic view of an embodiment of a percolation system according to the invention,
Fig. 2 is a perspective view of an embodiment of a percolation manifold,
Fig. 3 is a perspective view of another embodiment of the percolation manifold provided with butterfly valves with magnetic control devices, and
Fig. 4 is a well with an inspection chamber base, said well having a built-in percolation manifold; the well is shown in a vertical cross-section, whereas the percolation manifold is not in a sectional view.

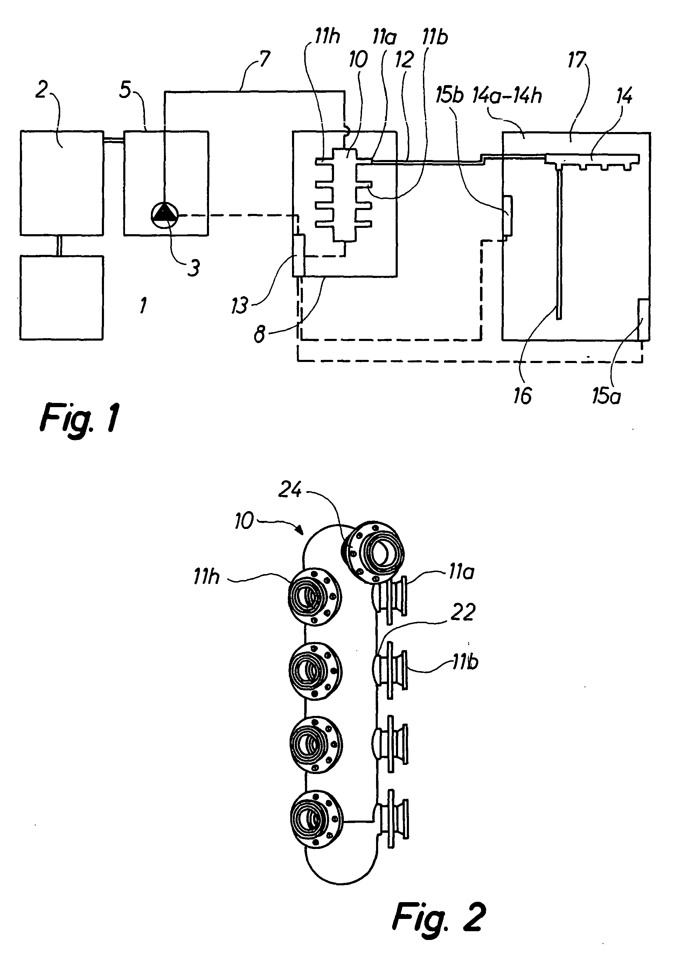

The percolation system shown in Fig. 1 comprises a sedimentation tank 1 connected to a clearing basin 2; the latter is connected to a pump 3 in a pump well 5. The delivery side of the pump 3 is connected via a pipe 7 to a percolation manifold 10 (cf. Fig. 2) mounted in a container 8. As it appears, the percolation manifold 10 is indirectly connected to the sedimentation tank 1. An outlet pipe 12 (Fig. 1 only depicts one such outlet pipe 12 for the sake of clarity) is connected to each valve 11 a-11 h arranged on the percolation manifold 10. The waste water which is to be drained off can be pumped via the pump 3 to the leach fields 14a-14h where the waste water can percolate. The system also comprises monitoring units 15a, 15b to monitor for instance the water level or the bacterial level on the leach fields 14a-14h of the system. These monitoring units can via electronic signals - and optionally via a program control unit 13 - transmit signals to one or more of the valves 11 a-11 h controlling whether they are to open or close. Each monitoring field has its own monitoring units corresponding to the monitoring units 15a, 15b.

As shown in Fig. 1, the outlet pipe 12 of the percolation manifold can be split into a plurality of thinner pipes 16 - for instance via a leach manifold 14 - when reaching the leach fields 14a-14h. However, for the sake of simplicity, Fig. 1 only depicts one single pipe 16. The outlet pipe 12 extending from the percolation manifold 10 can have an outer diameter of for instance 75 mm. The pipe 12 can be split into for instance four thinner pipes 16 - via the leach manifold 14- each pipe having an outer diameter of for instance 40 mm.

The outlet pipes 12 and/or the thin pipes 16 - which are percolation pipes - can be made of polyethylene and/or polypropylene.

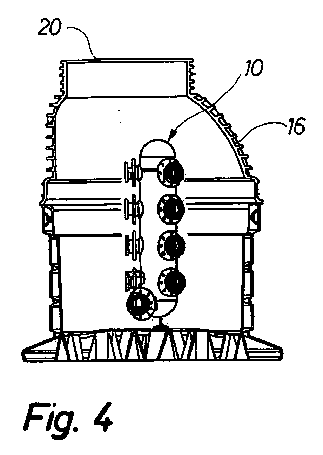

As shown in Fig. 2, the percolation manifold 10 can be tubular; and at the many outlets thereof - in the present case 8 outlets - a saddle connection member 22 can be provided at each outlet. Each end of the percolation manifold 10 - or merely the one end of said manifold, cf. Figs. 2 and 4 - can be formed by or contain a T-piece 24. The inlet of the percolation manifold 10 can be shaped as an optionally larger saddle connection member or a T-piece.

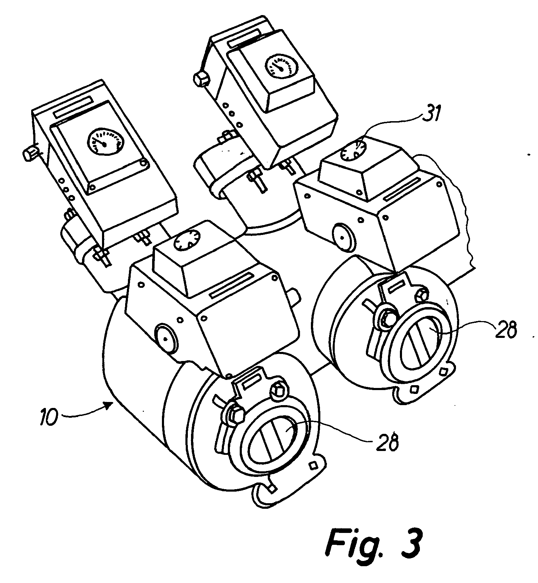

The valves of the percolation manifold can be adapted to be opened or closed via the aforementioned program control unit 13 being connected to the aforementioned monitoring units 15a, 15b. In this way, the valves 11a-11h can be butterfly valves 28, cf. Fig. 3, each being provided with a control system with magnetic control devices. Each control device can be provided with a meter 31 indicating whether the valve 28 is open or closed.

According to the invention, the percolation system can optionally be adapted to subject at least part of the total leach field area 14a-14h to pressure; the size of the area which is subjected to pressure can be controlled by the aforementioned program control unit 13.

Finally, the program control unit 13 of the percolation system can be provided with a not-shown auxiliary control unit allowing the use of a GSM model for sending alarms to a telephone or a PC.

A method of operating a percolation system for waste water according to the invention aims at providing an automatic opening and closing of the valves 11 a-11 h in a pre-programmed order and according to signals produced by the pump 3 or by corresponding signal-producing equipment by means of the program control unit 13. It is noted that the percolation manifold 10 is arranged between the pump well 5 and the leach fields 14a-14h. The use of the described method ensures that the pump capacity for the leach fields 14a-14h associated with the system is made significantly more effective. This is due to the fact that the system ensures that when a leach field is taken into use - usually a small portion of the total leach field area - the user can be sure that said field is not already filled with waste water but is ready to receive it and drain it when it arrives.

While the program control unit 13 can provide the opening and closing of the mentioned valves 11 a-11 h, the program control unit 13 can simultaneously contribute to monitor the leach fields 14a-14h. Each leach field can be monitored with regard to at least one parameter; be it for instance the water level in the leach fields or the bacterial activity. The signal corresponding to the individual parameter is transmitted to the program control unit 13 to determine the order in which the valves 11a-11h in the percolation manifold 10 are opened and closed.

Fig. 4 shows how the percolation manifold 10 can be mounted in a container 16 with inspection opening 20. The pipes extending from the percolation manifold 10 to the leach fields 14a-14c and the pipe 7, cf. Fig. 1, extending from the pump 3 are, however, not shown.

The invention can be varied in many ways without deviating from the scope of the present invention. Thus, the number of valves 11 a-11 h can be much higher than the proposed eight valves, and the number of leach fields can also be very high.

## Claims

1. A method of operating a percolation system for waste water, said system comprising a sedimentation tank (1), a clearing basin (2), a pump well (5) provided with a pump (3) and a plurality of leach fields (14a-14h), **characterised in that** an automatic opening and closing of the predetermined valves (11 a-11 h) is provided in a pre-programmed order and according to signals produced by said pump (3) or by corresponding signal-producing equipment by means of a program control unit (13) controlling said valves (11 a-11 h) arranged on a percolation manifold 10, the latter being arranged between the pump well (5) and the leach fields (14a-14h).

2. A method according to claim 1, **characterised in that** the leach fields (14a-14h) are monitored by means of the program control unit (13).

3. A method according to claim 1 or 2, **characterised in that** each leach field (14a-14h) is monitored with regard to at least one parameter, such as the water level or the bacterial activity, and that the signals corresponding to said parameter are being transmitted to the program control unit (13) to determine the order in which the valves (11a-11h) are opened and closed.

4. A percolation system for carrying out the method of claims 1 to 3, **characterised in that** said system comprises a sedimentation tank (1) and a percolation manifold (10) having openings provided with valves (11a-11h), said percolation manifold (10) communicating with the sedimentation tank, and where an outlet pipe (12) is connected to said valves, said system further comprising a pump (3) for pumping the waste water which is to percolate into the system, and monitoring units (15a, 15b) for monitoring for instance the water level and the bacterial level in the leach fields (14a-14h) of the system, and for transmitting monitoring signals back to one or more of said valves (11a-11 h) with a view to opening or closing the latter.

5. A percolation system according to claim 4, **characterised in that** the percolation manifold (10) is arranged in a well of a suitable type, e.g. a well (16) with an inspection chamber base.

6. A percolation system according to claim 4 or 5, **characterised in that** each outlet pipe (12) extending from the percolation manifold (10) is split into a plurality of thinner pipes (16), via for instance a leach manifold (14), when reaching the leach areas (14a-14h), for instance an outlet pipe (12) of an outer diameter of 75 mm being split, via the leaching manifold (14), into four thinner pipes (16), i.e. standard percolation pipes, of an outer diameter of 40 mm.

7. A percolation system according to one or more of the claims 4 to 6, **characterised in that** the outlet pipes (12) and/or the thin pipes (16), i.e. the percolation pipes, are made of PE, i.e. polyethylene, and/or PP, i.e. polypropylene.

8. A percolation system according to one or more of the claims 4 to 7, **characterised in that** the percolation manifold (10) is tubular and has a plurality of saddle connection members (22) secured thereto, and that at least one end of the percolation manifold (10) is formed by a T-piece (24) for mounting the valves (11a-11 h).

9. A percolation system according to claim 8, **characterised in that** the inlet of the percolation manifold (10) is shaped as an optionally larger saddle connection member or a T-piece (24).

10. A percolation system according to claim 8 or 9, **characterised in that** the valves (11a-11h) of the percolation manifold (10) are adapted to be opened or closed via a particular control system (13) being connected to the aforementioned monitoring units.

11. A percolation system according to one or more of the claims 8, 9 or 10, **characterised in that** the valves (11a-11h) are for instance butterfly valves (28), cf. Fig. 3, with magnetic control devices.

12. A percolation system according to one of more of the claims 4 to 11, **characterised by** being adapted to subject at least part of the total leach field area (14a-14h) to pressure, said fields being controlled by the aforementioned program control unit (13).

13. A percolation unit according to one or more of the claims 8 to 12, **characterised in that** the program control unit (13) is provided with an auxiliary control unit allowing the use of a GSM model for sending alarms to a telephone or a PC.
